(19) Europäisches Patentamt
European Patent Office
Office européen des brevets

(11) Veröffentlichungsnummer: **0 005 497**
**B1**

(12) **EUROPÄISCHE PATENTSCHRIFT**

(45) Veröffentlichungstag der Patentschrift: **09.09.81**

(51) Int. Cl.³: **C 07 F 5/04, C 08 K 5/55**

(21) Anmeldenummer: **79101384.0**

(22) Anmeldetag: **07.05.79**

# (54) Spirocyclische Borverbindungen, Verfahren zu ihrer Herstellung und ihre Verwendung als flammhemmender Zusatz.

(30) Priorität: **12.05.78 DE 2820909**

(43) Veröffentlichungstag der Anmeldung:
**28.11.79 Patentblatt 79/24**

(45) Bekanntmachung des Hinweises auf die Patenterteilung:
**09.09.81 Patentblatt 81/36**

(84) Benannte Vertragsstaaten:
**AT BE CH DE FR GB IT NL SE**

(56) Entgegenhaltungen:
**FR - A - 1 331 630**
**FR - A - 2 148 142**
**GB - A - 1 014 655**
**US - A - 3 772 357**

(73) Patentinhaber: **CHEMIE LINZ AKTIENGESELLSCHAFT**
**St. Peter-Strasse 25**
**A-4020 Linz (AT)**

(84) **BE CH FR GB IT NL SE AT**

(73) Patentinhaber: **Lentia Gesellschaft mit beschränkter Haftung**
**Schwanthalerstrasse 39 Postfach 20 16 26**
**D-8000 München 2 (DE)**

(84) **DE**

(72) Erfinder: **Saischek, Gerald, Dipl. Ing.**
**Roseggerstrasse 4**
**A-4600 Wels (AT)**
Erfinder: **Wegleitner, Karlheinz, Dipl. Ing. Dr.**
**Adolf-Schärf-Strasse 12**
**A-4045 Linz (AT)**
Erfinder: **Heu, Ferdinand**
**Piccolominigasse 4**
**A-4033 Linz (AT)**
Erfinder: **Wohlmuth, Roman**
**Binderlandweg 12**
**A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 005 497 B1

# Spirocyclische Borverbindungen, Verfahren zu ihrer Herstellung und ihre Verwendung als flammhemmender Zusatz

Die Erfindung betrifft spirocyclische Borverbindungen, deren Herstellung und Verwendung als flammhemmender Zusatz für verschiedene Kunststoffe wie Polyurethane, Epoxydharze und Polyester.

Es ist bekannt, daß die meisten, normalerweise brennbaren Kunststoffe, wie Polyolefine, Polystyrol, Polymethacrylate, Polyvinylacetat, Polyvinylacetale, Polyamide, Polyester, Polyurethane, Polycarbonate, Epoxydharze durch Zusätze bestimmter chemischer Verbindungen schwerer entflammbar oder gar unbrennbar gemacht werden können. Solche chemische Verbindungen enthalten üblicherweise Phosphor, Stickstoff und Halogen, wie Chlor oder insbesondere Brom, wobei die flammhemmende Wirkung noch durch Zusätze von Verbindungen der 5. Hauptgruppe des Periodensystems, wie Antimon- oder Wismutverbindungen, insbesondere Antimontrioxyd, verstärkt wird.

So kann man beispielsweise Polyurethanschaumstoffe durch Zusatz von halogenierten Phosphorsäureestern flammfest ausrüsten. (M. W. RANNEY "Fire resistant and flame retardent polymers" pg. 3 ff) Werden diese flammhemmenden Substanzen jedoch Polyurethanschaumansätzen, die außer der Diisocyanatkomponente alle für die Schaumbildung notwendigen Zusätze beinhalten, zugemischt, so zeigen diese Mischungen eine gewisse Instabilität. Diese Instabilität kommt dadurch zustande, daß das Halogen in diesen Phosphorverbindungen insbesondere durch Spuren von Wasser mehr oder weniger leicht abgespalten werden kann und dadurch die der Mischung zugesetzten tertiären Amine infolge Salzbildung desaktiviert werden.

Eine andere Möglichkeit zur Herstellung flammfester Polymererbesteht darin, bereits bei der Polymerisation oder Polykondensation eines Kunststoffes ein bromiertes Monomeres zuzusetzen, und dadurch direkt in den Molekülverband einzubauen. Ein Beispiel hiefür wäre die Herstellung von Epoxydharz, dessen eine Komponente Bisphenol A darstellt. Zur Herstellung von flammfestem Epoxydharz wird Tetrabrombisphenol A mitkondensiert. Als nachteilig erweisen sich dabei die benötigten hohen Zusatzmengen von 30 bis 33 Gew.%, da hier schon deutliche Veränderungen der Eigenschaften des Epoxydharzes festzustellen sind (DE—A—25 03 368).

In der DE—A—22 38 243 wird die Umsetzung von Borsäure oder Borsäurederivaten mit organischen, halogenhältigen Hydroxyverbindungen zu Borsäureestern beschrieben, die sich besonders als flammfeste Zusätze zu Polypropylen, das anschließend schmelzgesponnen wird, oder auch zum Imprägnieren von Polypropylen-Gewebe eignen.

Nicht zum Zwecke der Flammhemmung, sondern als Öladditiv oder als Katalysator zur Herstellung von Polyurethanen, Polyisocyanuraten oder Isocyanuraten sind Spiroborverbindungen, Verbindungen, in denen das Bor vierbindig ist, ebenfalls bereits bekannt.

So wird z.B. in der US—A—2 497 521 durch Erhitzen von Borsäure und Äthylenglykol eine Borsäure-Äthylenglykol-Komplexverbindung hergestellt und isoliert, die nach Erhitzen mit einem Amin das entsprechende Aminsalz der Spiroborverbindung ergibt. Borsäure und Äthylenglykol werden in einem 30%igen Überschuß eingesetzt. Auf diese Weise wurde eine Reihe von Verbindungen hergestellt, die die Lagerfähigkeit und Korrosionsbeständigkeit von Ölen auf Kohlenwasserstoffbasis erhöhen. In US—A—3 635 848 sind Na-Salze von Spiroborsäureestern beschrieben, die durch Erhitzen von Borsäure mit einem großen Überschuß eines nicht durch Halogen substituierten Glykols unter Abdestillieren des gebildeten Wassers in Vakuum und anschliessendem Erhitzen des Reaktionsproduktes mit metallischen Natrium hergestellt wurden. Diese Verbindungen eignen sich als Katalysatoren zur Herstellung von Polyurethanen, Polyisocyanuraten, zur Trimerisierung von Isocyanaten udgl. Laut US—A—3 772 357 werden durch Umsatz von 2 Molen eines ebenfalls nicht durch Halogen substituierten, vicinalen Glykols, das mehr als 2 OH-Gruppen besitzt, mit 1 Mol Borsäure und durch anschließende Veresterung der freien OH-Gruppen mit einer Carbonsäure, welche 8 bis 22 C-Atome besitzt, spirocyclische Borverbindungen erhalten, welche oberflächenaktiv und antistatisch wirken, und die Hitzebeständigkeit in synthetischen Harzen erhöhen.

Weiters sind in FR—A—1 331 630 sowie in GB—A—1 014 655 der Umsatz eines in ortho- und in para-Stellung durch Halogen oder Alkyl disubstituierten Phenols mit einem Aldehyd zu einem Derivat des ortho-Hydroxybenzylalkohols und anschließender Umsatz mit Borsäure und NaOH zu einem spirocyclischen Borsäurekomplex des durch Alkyl oder Halogen substituierten ortho-Hydroxybenzylalkohols beschrieben. Die in organischen Lösungsmitteln gut löslichen Derivate des ortho-Hydroxybenzylalkohols werden bei der Erdölgewinnung verwendet, um Borationen aus wäßrigen Salzlösungen in ein organisches Medium zu extrahieren, wobei Mono- und Di-saligenin-borat-Komplexe entstehen.

Demgegenüber wurde nun eine neue Klasse spirocyclischer, halogenhältiger Borverbindungen gefunden, die vorzügliche flammhemmende Eigenschaften und gute chemische Stabilität aufweist. Diese Spiroborverbindungen werden durch Erhitzen äquivalenter Mengen von Borsäure oder Bortrioxyd mit einer halogenhältigen Dihydroxyverbindung und einer starken Base hergestellt.

Gegenstand der vorliegenden Erfindung sind demnach spirocyclische Borverbindungen der allgemeinen Formel

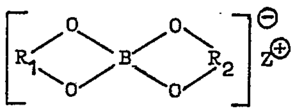

I,

worin $R_1$ gleich oder ungleich $R_2$ ist, und einen durch Chlor, Brom oder Jod 2 bis 4fach substituierten, geradkettigen oder verzweigten Alkylenrest mit 2 bis 6 C-Atomen, den 1,2,3,4,7,7-Hexachlor-bicyclo-(2,2,1)-hepten-(2)-5,6-bis-methylenrest, einen durch Chlor, Brom oder Jod 2 bis 4fach substituierten Orthophenylen- oder Ortho-ortho'-biphenylenrest oder den Rest der Formel

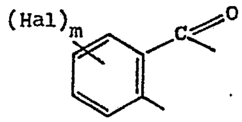

II

bedeutet, in der (Hal) für Chlor oder Brom und m für die Zahl 3 oder 4 steht, und $Z^+$ ein Alkali- oder Erdalkalimetallion, ein zweiwertiges Übergangsmetallion, die Ionen Guanidinium, Ammonium, Mono-, Di-, Tri- und Tetraalkylammonium, Cycloalkylammonium oder Dimethylbenzylammonium bedeutet.

Die neuen Verbindungen der Formel I werden hergestellt, indem man 1 Mol Borsäure oder Bortrioxyd mit einem oder, wenn $R_1$ gleich $R_2$ ist, mit zwei Molen eines Diols der allgemeinen Formel

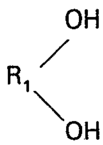

III,

in der $R_1$ die oben angeführte Bedeutung hat, oder mit einer durch Chlor oder Brom 3 bis 4fach substituierten Salicylsäure und, falls $R_1$ ungleich $R_2$ ist, anschließend mit einem Mol eines Diols der allgemeinen Formel

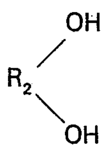

IV,

in der $R_2$ die oben angeführte Bedeutung hat, oder mit einer durch Chlor oder Brom 3 bis 4fach substituierten Salicylsäure in Gegenwart von mindestens 1 Mol einer Base oder eines basisch reagierenden Salzes der Formel $Z^+Y^-$, wobei $Z^+$ wie oben definiert ist und $Y^-$ ein OH-Ion oder das Ion einer schwachen Säure bedeutet, bei einer Temperatur von 20 bis 200°C, vorzugsweise bei einer Temperatur von 60 bis 150°C, in einem inerten Lösungsmittel umsetzt.

Beispiele solcher Basen oder basisch reagierender Salze sind: Guanidincarbonat, Tetraalkylammoniumhydroxyd, Tri-, Di oder Monoalkylammoniumhydroxyd, Ammoniumhydroxyd, Alkali- oder Erdalkalihydroxyde.

Als halogenhältige Dihydroxyverbindungen kommen vor allem zwei- bis vierfach durch Halogen substituierte Brenzkatechinderivate, ebenso substituierte Derivate des $\alpha,\alpha'$-Dihydroxybiphenyls, des Äthylenglykols, Hexandiols, Propylenglykols, Butylenglykols, Neopentylglykols, drei- oder vierfach durch Cl oder Br substituierte Derivate der Salicylsäure oder das Hexachlorbicycloheptendimethylol in Betracht. Diese Verbindungen sind bekannt und können nach einem der in der Literatur beschriebenen Verfahren hergestellt werden, d.h. durch Addition von Halogen an eine Doppelbindung oder durch Substitution der Wasserstoffatome durch Halogen.

Die Umsetzungen können bei Atmosphärendruck oder auch unter erhöhtem oder vermindertem Druck durchgeführt werden. Auch die Reaktionstemperaturen können innerhalb weiter Grenzen schwanken. Vorteilhaft führt man die Reaktion bei einer Temperatur von 20 bis 200°C, vorzugsweise zwischen 60 bis 150°C durch. Die Reaktion kann vorteilhafterweise in einem mit Wasser nicht mischbaren Lösungsmittel, wie Toluol, Xylol oder Chlorform durchgeführt werden. Dabei wird das bei der Kondensation zwischen Borsäure bzw. Bortrioxyd und der Dihydroxyverbindung entstehende Reaktionswasser azeotrop aus dem Reaktionsgemisch abdestilliert.

Die Reaktion kann aber auch ohne Entfernen des Reaktionswasser in einer mit Wasser mischbaren Flüssigkeit, wie z.B. Methanol, oder direkt mit Wasser oder in einem Gemisch der beiden, durchgeführt werden. Nach beendeter Reaktion wird meist ein kristalliner, farbloser Feststoff in hohen Ausbeuten erhalten, der abgesaugt, getrocknet und eventuell umkristallisiert werden kann.

Die neuen Verbindungen der Formel I eignen sich vorzüglich als flammhemmende Mittel und können zahlreichen Polymeren zugesetzt werden. Die dabei Verwendung findenden Mengen richten sich nach der jeweiligen chemischen Zusammensetzung des Polymeren sowie nach dessen physikalischem Zustand. Gewöhnlich werden Mengen von 1 bis 25 Gew.% benötigt, wobei die flammhemmende Wirkung durch Zusatz eines Synergisten noch verstärkt werden kann. Solche Synergisten sind bekannt es sind Oxyde oder Halogenide von Wismut, Arsen oder Antimon. Die bevorzugten Synergisten sind Antimonoxyde. Diese Synergisten werden in Mengen von 1 bis 15 Gew.%, bezogen auf das Gewicht des ausgerüsteten Kunststoffes, und 25 bis 75 Gew.%, bezogen auf das Gewicht des jeweils verwendeten Flammhemmers, zugesetzt. Es können auch noch andere, die Wirkung der flammhemmenden Substanzen unterstützende Füllstoffe, wie Aluminiumhydroxyd, beigemischt werden.

Besonders geeignet sind die Verbindungen der Formel I als Flammschutzmittel für Polyurethane, da sie chemisch sehr beständig, gut in organischen Lösungsmitteln, in warmem Polyol und anderen organischen Lösungsmitteln löslich sind und sich durch gute Lagerstabilität auszeichnen.

Die Zusatzmenge an Verbindungen der Formel I hängt vom Ausmaß der für den jeweiligen Verwendungszweck des fertigen Kunststoffes geforderten, flammhemmenden Wirkung ab. Um Polyurethane selbstverlöschend bzw. nicht brennbar gemäß ASTM-Test D 1692—67T auszurüsten, genügen im allgemeinen Mengen von 8 bis 25 Teilen einer Verbindung der Formel I auf 100 Teile Polyol, je nachdem, ob und in welchen Mengen Synergisten zugesetzt wurden. Tabelle 1 zeigt die Möglichkeiten auf, welche Werte bezüglich Brandausdehnung, Brennrate und der Klassifizierung in selbst erlöschend und nicht brennbar gemäß ASTM-Test D 1692—67T erhalten werden können.

Es zeigt sich, daß erwartungsgemäß ohne Zusatz eines Synergisten höhere Mengen einer Verbindung der Formel I notwendig sind, um Selbstverlöschung zu erreichen. Durch entsprechende Variation der eingesetzten Mengen an Verbindung der Formel I und Synergist ist es sogar möglich, Brandausdehnungen von nur 1,81 cm und somit eine Brennrate von nur 1,96 cm/min gemäß ASTM Test D 1692—67T zu erreichen.

Auch in Epoxydharzen erweisen sich die beschriebenen Verbindungen der Formel I als besonders wirksam. So kann, wie aus Tabelle 2 ersichtlich ist, mit der Verbindung gemäß Beispiel 1 schon bei einer Zusatzmenge von 10 Gew.% und ohne Zusatz eines Synergisten die Klasse selbst erlöschend gemäß ASTM Test 635—63 erreicht werden. Mit 15 Gew.% der Verbindung gemäß Beispiel 11 und einem Zusatz von 2,5 Gew.% $Sb_2O_3$ wird das Harz nicht brennend.

Polyesterharze werden schon mit wenigen Prozenten der Verbindungen der Formel I nicht brennbar.

Im folgenden werden mehrere Beispiele zur Herstellung der Verbindungen der Formel I sowie deren Anwendung zur Herstellung flammfester Kunststoffe beschrieben.

Beispiel 1

In einer Rührapparatur mit Rückflußkühlung werden 212,8 Teile (0,5 Mol) Tetrabrombrenzcatechin in einer Mischung, bestehend aus 586 Teilen Methanol und 147,26 Teilen (0,25 Mol) einer 25 Gew.%igen methanolischen Tetraäthylammoniumhydroxydlösung auf Rückflußtemperatur gebracht. Beim Aufheizen des Gemisches geht das Tetrabrombrenzcatechin vollständig in Lösung. Zu dieser Lösung wird nun bei Rückflußtemperatur eine heiße Lösung, bestehend aus 100 Teilen Wasser und 15,45 Teilen (0,25 Mol) Borsäure, auf einmal zugegeben. Nach einigen Minuten beginnt das Reaktionsprodukt auszufallen. Die Lösung wird noch 1 Stunde auf Rückflußtemperatur gehalten. Anschließend wird die Lösung abgekühlt und das Reaktionsprodukt abgesaugt. Man erhält 224,87 Teile (0,23 Mol) Tetraäthylammonium-bis-(tetrabrombrenzcatechinato)-borat(1—);
Fp = 278—280°C.

Beispiel 2

In einer Rührapparatur, ausgerüstet mit einem Wasserabscheider, werden 106,25 Teile (0,25 Mol) Tetrabrombrenzcatechin, 12,5 g (0,123 Mol) Triäthylamin und 7,7 Teile (0,124 Mol) Borsäure in 400 ml Toluol auf Rückflußtemperatur gebracht. Nach einigen Minuten tritt vollständige Lösung der Komponenten ein. Mit Hilfe des Wasserabscheiders werden 6,7 Teile $H_2O$ abgeschieden. Die Lösung wird noch 1 Stunde auf Rückflußtemperatur gehalten. Anschließend wird nach Erkalten der Lösung das Produkt abgesaugt. Man erhält 109,2 g (0,11 Mol) Triäthylammonium-bis-(tetrabrombrenzcatechinato)-borat(1—);
Fp = >250°C (Zersetzung).

Beispiel 3

In einer Rührapparatur werden 9,08 Teile (0,02 Mol) Tetrabromsalicylsäure, 0,62 Teile (0,01 Mol) Borsäure und 3,8 Teile (0,01 Mol) einer 24%igen methanolischen Tetramethylammoniumhydroxydlösung in 90 ml $H_2O$ und 50 ml Methanol aufgeschlämmt. Das Gemisch wird 3 Stunden auf Rückflußtemperatur gehalten. Anschließend wird das Gemisch abgekühlt und das Reaktionsprodukt abgesaugt. Man erhält 9,2 Teile (0,0093 Mol) Tetramethylammonium-bis-(tetrabromsalicylato)-borat(1—);
Fp = >298°C (Zersetzung).

Beispiel 4

In einer Rührapparatur werden 17,6 Teile (0,02 Mol) Natrium-bis-(tetrabrombrenzcatechinato)-borat(1—) in 180 ml Äthanol gelöst. Zu dieser Lösung gibt man 1,36 Teile (0,01 Mol) Zinkchlorid. Die Lösung wird 1 Stunde auf Rückflußtemperatur gehalten. Anschließend werden 100 ml Äthanol destillativ entfernt und der Rückstand in 1500 Teile Wasser eingerührt. Nach Absaugen des voluminösen, weißen Niederschlages erhält man 14 Teile (0,008 Mol) Zink-bis-[bis-(tetrabrombrenzcatechinato)-borat(1—)]-pentahydrat;
fp. = 179—183°C (Zersetzung).

Beispiel 5

In einer Rührapparatur werden 78,5 Teile (0,3 Mol) 2,2-Bis-(brommethyl)-propandiol-1,3 und 9,3 Teile (0,15 Mol) Borsäure in 100 ml Wasser aufgeschlämmt und unter Rühren eine Stunde auf 90°C gehalten. Anschließend werden langsam 8,4 Teile (0,15 Mol) KOH zugegeben. Die Lösung wird eingeengt und man erhält 61 Teile (0,1 Mol) Kalium-bis-[2,2-bis(brommethyl)-propandiolato-1,3]-borat(1—);
Fp = >215°C (Zersetzung).

Analog wurden dargestellt:

Beispiel 6

Tetraäthylammonium - bis - [(3,3′,5,5′ - tetrabrom - 1,1′ - biphenyl) - 2,2′ - diolato - 0,0′] - borat(1—);
Fp = 251—255°C.

Beispiel 7

Guanidin-bis-[(3,3′,5,5′-tetrabrom-1,1′-biphenyl)-2,2′-diolato-0,0′]-borat(1—);
Fp = >400°C (Zersetzung).

Beispiel 8

Ammonium-bis-(tetrabrombrenzcatechinato)-borat(1—);
Fp = >298′C (Zersetzung).

Beispiel 9

Natrium-bis-(tetrabrombrenzcatechinato)-borat(1—);
Fp = >350°C (Zersetzung).

Beispiel 10

Guanidin-bis-(2,3-dibrom-1,4-butandiolato)-borat(1—);
Fp = 142—145°C.

Beispiel 11

Guanidin-bis-[2,2-bis-(brommethyl)-1,3-propandiolato]-borat(1—);
Fp = 218—223°C.

Beispiel 12

Natrium-bis-[2,2-bis-(brommethyl)-1,3-propandiolato]-borat(1—)
Fp = 192—194°C.

Beispiel 13

Tetramethylammonium-bis-(tetrabromsalicylato)-borat(1—);
Fp = 268°C (Zersetzung).

Beispiel 14

Guanidin-bis-[2,2-bis-(jodmethyl)-1,3-propandiolato]-borat(1—);
Fp = 220—222°C.

Beispiel 15

Kalium-bis-[(3,3′,5,5′-tetrabrom-1,1′-biphenyl)-2,2′-diolato-0,0′]-borat(1—);
Fp = >350°C.

Beispiel 16

Guanidin-bis-[2,2-bis(chlormethyl)-1,3-propandiolato]-borat(1—);
Fp = 248—249°C.

Beispiel 17

Diäthylammonium-bis-(tetrabrombrenzcatechinato)-borat(1—);
Fp = >270°C (Zersetzung).

Beispiel 18

Cyclohexylammonium-bis-(tetrabrombrenzcatechinato)-borat(1—); Fp = >300°C (Zersetzung).

Beispiel 19

n-Hexylammonium-bis-(tetrabrombrenzcatechinato)-borat(1—); Fp = 248—251°C (Zersetzung).

Beispiel 20

Diiso-butylammonium-bis-(tetrabrombrenzcatechinato)-borat(1—); Fp = 210—213°C (Zersetzung).

Beispiel 21

Dimethylbenzylammonium-bis-(tetrabrombrenzcatechinato)-borat(1—); Fp = 243—245°C.

Beispiel 22

Triäthylammonium - bis - [1,2,3,4,7,7 - hexachlor - bicyclo(2,2,1) - hepten - (2) - 5,6 - bis - methanolato] - borat(1—); Fp = >350°C (Zersetzung).

Beispiel 23

Triäthylammonium-bis-[2,2-bis-(brommethyl)-1,3-propandiolato]-borat(1—); Fp = ~30°C Erweichung.

Beispiel 24

Guanidin - [2,2 - bis - (jodmethyl) - 1,3 - propandiolato - 2′,2′ - bis - (brommethyl) - 1′,3′ - propandiolato] - borat(1—); Fp = 214—218°C.

Beispiel 25

Diäthylammonium - [2,2 - bis - (brommethyl) - 1,3 - propandiolato - tetrabrombrenzcatechinato]-borat(1—); Fp = 269—271°C.

Beispiel 26

Triäthylammonium-bis-[(3,3′,5,5-tetrabrom-1,1′-biphenyl)-2,2′-diolato-0,0′]-borat-(1—); Fp = >281°C (Zersetzung).

Beispiel 27

Ein Gemisch, das 100 Teile eines Polyols mit einer Hydroxylzahl von ca. 500, 35 Teile Trichlorfluormethan, 1 Teil N,N-Dimethylcyclohexylamin, 12 Teile der Verbindung gemäß Beispiel Nr. 2 und 4 Teile $Sb_2O_3$ enthält, wird in ein Becherglas eingewogen. Diese Mischung wird mit einem Propellerrührer ca. 60 sec. mit 1 000 UpM gut gemischt. In dieses Gemisch werden nun 146 Teile 4,4′-Diisocyanatdiphenylmethan eingetragen und das Mischen noch ca. 10 sec. fortgesetzt. Das Gemisch wird nun in eine Papierform ausgegossen. Der erhaltene Schaum besitzt eine Dichte von 39,2 g/l.

Analog wurden unter Verwendung verschiedener erfindungsgemäßer Verbindungen weitere Schäume dargestellt.

Die hiefür eingesetzten Verbindungen, die Gewichtsteile der eingesetzten Verbindungen, bezogen auf 100 Teile Polyol, die Art und Menge der verwendeten Synergisten bzw. Füllstoffe, die Schaumdichte, sowie das Brennverhalten der Schäume sind in Tabelle 1 gegenübergestellt. Die Brennbarkeit der Schäume wurde mit Hilfe des ASTM-Tests D 1692—67T untersucht und klassifiziert. Zur Durchführung dieses Tests wurden aus den jeweils erhaltenen, festen Schäumen Probekörper mit den Abmessungen von 15,2 cm x 5,1 cm x 1,3 cm herausgeschnitten. Aus den erhaltenen Werten ist ersichtlich, daß einige der erhaltenen Schäume selbstverlöschend waren, die meisten jedoch die Klassifizierung nicht brennbar (gemäß D 1692—67T) erhielten.

Beispiel 28

37,8 Teile Epoxydharz auf Basis Bisphenol A, 25,2 Teile Polyaminoimidazolin und 7 Teile der Verbindung gemäß Beispiel 1 werden in einem Becherglas durch Rühren mit einem Korbrührer (ca. 120 sec. mit 1 000 UpM) gut durchmischt. Nach dem Aushärten wurde mit den erhärteten Stäbchen der ASTM-Test ASTM-D-635—63 durchgeführt.

Analog wurden weitere Epoxydharze unter Verwendung verschiedener erfindungsgemäßer Verbindungen hergestellt. Die hiefür eingesetzten Verbindungen, die jeweiligen Gewichtsprozente der eingesetzten Verbindungen und des Synergisten sowie das Brandverhalten des Harzes sind in Tabelle 2 gegenübergestellt.

Beispiel 29

Zu 71,392 Teilen eines handelsüblichen, ungesättigten Polyestervorpolymerisats werden 0,17 Teile N,N-Dimethylanilin, 2,208 Teile Benzoylperoxydpaste (50%ig), 4,8 Teile der Verbindung gemäß Beispiel 1 und 1,6 Teile $Sb_2O_3$ in ein Becherglas eingewogen und mit einem Korbrührer ca. 4 min. mit 800 UpM gut durchmischt. Nach dem Aushärten wird mit dem erhaltenen Probekörper der ASTM-Test ASTM-D-635—63 durchgeführt.

Analog wurden weitere Polyesterharze unter Verwendung verschiedener erfindungsgemäßer Verbindungen hergestellt. Die Ergebnisse sind in Tabelle 3 zusammengefaßt.

TABELLE 1

(Polyurethanschäume)

| Verb. gemäß Beisp. Nr. | Gew. Teile d. Verb. bez. auf 100 Teile Polyol | $Sb_2O_3$ Gew.-Teile | $Al(OH)_3$ Gew.-Teile | Schaumdichte g/l | Vor dem Erlöschen verstrichene Zeit (sec.) | Ausmaß d. Verbrennung (%) | Ausmaß d. Verbrennung (cm) | Brennrate (cm/min) | Klasse |
|---|---|---|---|---|---|---|---|---|---|
| 2 | 12 | 4 | – | 39,2 | 42,5 | 29,7 | 3,76 | 5,3 | n.b. 1) |
| 7 | 12 | 4 | – | 40,6 | 50,0 | 31,1 | 3,95 | 4,7 | n.b. |
| 18 | 12 | 4 | – | 52,6 | 62,5 | 46,3 | 5,87 | 5,64 | s.e. 2) |
| 10 | 8 | 4 | – | 36,9 | 37,75 | 31,7 | 4,02 | 6,4 | n.b. |
| 11 | 22 | – | – | 36,4 | 66,28 | 59.5 | 7.55 | 6,84 | s.e. |
| 11 | 8 | 4 | – | 59,3 | 50,0 | 27,6 | 3,5 | 4,2 | n.b. |
| 11 | 8 | 4 | 25 | 60,9 | 56,0 | 19,0 | 2,41 | 2,5 | n.b. |
| 11 | 8 | 4 | 10 | 56,0 | 56,1 | 37,7 | 4,78 | 5,12 | n.b. |
| 11 | 24 | 12 | 10 | 63,4 | 55,4 | 14,25 | 1,81 | 1,96 | n.b. |
| 11 | 25 | – | 15 | 62,6 | 63,5 | 32,5 | 4,13 | 3,9 | s.e. |
| 12 | 15 | 5 | – | 37,1 | 44,8 | 29,7 | 3,77 | 5,0 | n.b. |

1) n.b. = nicht brennbar

2) s.e. = selbst erlöschend

TABELLE 2

(Epoxydharze)

| Verbindg. gemäß Beisp. Nr. | Gew. % der Verbindung | Gew. % $Sb_2O_3$ | Vor dem Erlöschen verstrichene Zeit (sec.) | Ausmaß der Verbrennung (%) | Ausmaß der Verbrennung (cm) | Brennrate (cm / min) | Klasse |
|---|---|---|---|---|---|---|---|
| 1 | 10 | – | 123 | 21,5 | 1,65 | 0,81 | s.e. |
| 11 | 10 | 3,3 | 30 | 4,4 | 0,34 | 0,68 | s.e. |
| 11 | 20 | – | 0 | 0 | 0 | 0 | n.b. |
| 11 | 15 | 2,5 | 0 | 0 | 0 | 0 | n.b. [1)] |
| 2 | 8 | 2,6 | 57 | 6,3 | 0,48 | 0,50 | s.e. [2)] |
| 17 | 11 | – | 114 | 9,6 | 0,74 | 0,39 | s.e. |

1) n.b. = nicht brennbar

2) s.e. = selbst erlöschend

TABELLE 3

(Polyesterharze)

| Verbindg. gemäß Beisp. Nr. | Gew.% der Verbindung | Gew.% $Sb_2O_3$ | Vor dem Erlöschen verstrichene Zeit (sec.) | Ausmaß ser Verbrennung (%) | Ausmaß der Verbrennung (cm) | Brennrate (cm/min) | Klasse |
|---|---|---|---|---|---|---|---|
| 1 | 6 | 2 | 0 | 0 | 0 | 0 | n.b. [1)] |
| 7 | 7 | 2 | 0 | 0 | 0 | 0 | n.b. |
| 11 | 6 | 2 | 0 | 0 | 0 | 0 | n.b. |
| 12 | 6 | 2 | 0 | 0 | 0 | 0 | n.b. |

1) n.b. = nicht brennbar

**Patentansprüche**

1. Spirocyclische Borverbindungen der allgemeinen Formel

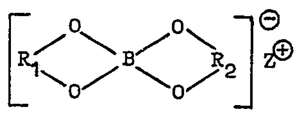

(I),

worin $R_1$ gleich oder ungleich $R_2$ ist und einen durch Chlor, Brom oder Jod 2 bis 4fach substituierten, geradkettigen oder verzweigten Alkylenrest mit 2 bis 6 C-Atomen, den 1,2,3,4,7,7-Hexachlor-bicyclo-(2,2,1)-hepten-(2)-5,6-bis-methylenrest, einen durch Chlor, Brom oder Jod 2 bis 4fach substituierten Orthophenylen- oder Ortho-ortho'-biphenylenrest oder den Rest der Formel

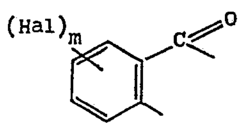

(II)

bedeutet, in der (Hal) für Chlor oder Brom und m für die Zahl 3 oder 4 steht, und $Z^+$ ein Alkali- oder Erdalkalimetallion, ein zweiwertiges Übergangsmetallion, die Ionen Guanidinium, Ammonium, Mono-, Di-, Tri- und Tetraalkylammonium, Cycloalkylammonium oder Dimethylbenzylammonium bedeutet.

2. Spirocyclische Borverbindung gemäß Anspruch 1, dadurch gekennzeichnet, daß die Verbindung Guanidin-bis-[2,2-bis-(brommethyl)-1,3-propandiolato]-borat(1—) ist.

3. Spirocyclische Borverbindung gemäß Anspruch 1, dadurch gekennzeichnet, daß die Verbindung Ammonium-bis-(tetrabrombrenzcatechinato)-borat(1—) ist.

4. Verfahren zur Herstellung der Verbindungen nach den Ansprüchen 1 bis 3, dadurch gekennzeichnet, daß 1 Mol Borsäure oder Bortrioxid mit einem oder, wenn $R_1$ gleich $R_2$ ist, mit zwei Molen eines Diols der allgemeinen Formel

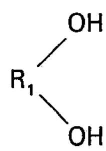

(III),

in der $R_1$ die oben angeführte Bedeutung hat oder mit einer durch Chlor oder Brom 3 bis 4fach substituierten Salicylsäure und, falls $R_1$ ungleich $R_2$ ist, anschließend mit einem Mol eines Diols der allgemeinen Formel

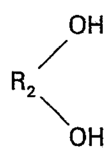

(IV),

in der $R_2$ die oben angeführte Bedeutung hat oder mit einer durch Chlor oder Brom 3 bis 4fach substituierten Salicylsäure in Gegenwart von mindestens 1 Mol einer Base oder eines basisch reagierenden Salzes der Formel $Z^+Y^-$, wobei $Z^+$ wie oben definiert ist und $Y^-$ ein OH-Ion oder das Ion einer schwachen Säure bedeutet, bei einer Temperatur von 20 bis 200°C in einem inerten Lösungsmittel umgesetzt wird.

5. Verfahren nach Anspruch 4, dadurch gekennzeichnet, daß die Umsetzung bei einer Temperatur von 60 bis 150°C erfolgt.

6. Verfahren nach den Ansprüchen 4 und 5, dadurch gekennzeichnet, daß die Umsetzung in einem mit Wasser nicht mischbaren Lösungsmittel durchgeführt wird und das bei der Reaktion entstehende Wasser durch Azeotropdestillation entfernt wird.

7. Verfahren nach den Ansprüchen 4 und 5, dadurch gekennzeichnet, daß die Umsetzung in Wasser oder in einem mit Wasser mischbaren Lösungsmittel durchgeführt wird.

8. Verwendung von spirocyclischen Borverbindungen gemäß den Ansprüchen 1 bis 3 neben synergistisch wirkenden Stoffen zum Flammfestmachen von Kunststoffen.

9. Verwendung von spirocyclischen Borverbindungen und synergistisch wirkenden Stoffen gemäß Anspruch 8, dadurch gekennzeichnet, daß der Synergist $Sb_2O_3$ ist.

10. Verwendung von spirocyclischen Borverbindungen und synergistisch wirkenden Stoffen gemäß den Ansprüchen 8 und 9, dadurch gekennzeichnet, daß als Kunststoffe Polyurethane, Epoxidharze oder Polyester eingesetzt werden.

**Claims**

1. Spirocyclic boron compounds of the general formula

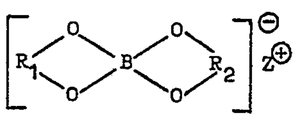

(I)

wherein $R_1$ is identical to or different from $R_2$ and denotes a straight-chain or branched alkylene radical which has 2 to 6 carbon atoms and is di-, tri- or tetra-substituted by chlorine, bromine or iodine, or the 1,2,3,4,7,7-hexachloro-bicyclo-(2,2,1)-hept-2-ene-5,6-bis-methylene radical, an orthophenylene or ortho-ortho'-biphenylene radical which is di-, tri- or tetra-substituted by chlorine, bromine or iodine, or the radical of the formula

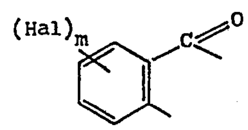

(II)

in which (Hal) represents chlorine or bromine and m represents the number 3 or 4, and $Z^+$ denotes an alkali metal ion or alkaline earth metal ion, a divalent transition metal ion or the ions guanidinium, ammonium, mono-, di-, tri- and tetraalkylammonium, cycloalkylammonium or dimethylbenzylammonium.

2. Spirocyclic boron compound according to Claim 1, characterised in that the compound is guanidine bis-[2,2-bis-(bromomethyl)-1,3-propanediolato]-borate(1—).

3. Spirocyclic boron compound according to Claim 1, characterised in that the compound is ammonium bis-(tetrabromopyrocatecholato)-borate(1—).

4. Process for the manufacture of the compounds according to Claims 1 to 3, characterised in that 1 mol of boric acid or boron trioxide is reacted with one or, if $R_1$ is identical to $R_2$, with two mols of a diol of the general formula

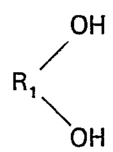

(III)

in which $R_1$ has the meaning indicated above, or with a salicylic acid which is tri- or tetra-substituted by chlorine or bromine, and, if $R_1$ is different from $R_2$, then with one mol of a diol of the general formula

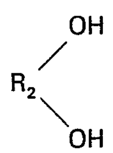

(IV)

in which $R_2$ has the meaning indicated above, or with a salicylic acid which is tri- or tetra-substituted by chlorine or bromine, in the presence of at least 1 mol of a base or of a salt, having a basic reaction, of the formula $Z^+Y^-$, wherein $Z^+$ is as defined above and $Y^-$ denotes an CH ion or the ion of a weak acid, at a temperature from 20 to 200°C in an inert solvent.

5. Process according to Claim 4, characterised in that the reaction is carried out at a temperature from 60 to 150°C.

6. Process according to Claims 4 and 5, characterised in that the reaction is carried out in a water-immiscible solvent and the water formed during the reaction is removed by azeotropic distillation.

7. Process according to Claims 4 and 5, characterised in that the reaction is carried out in water or in a water-miscible solvent.

8. Use of spirocyclic boron compounds according to Claims 1 to 3, in addition to substances having a synergistic action, for flameproofing plastics.

9. Use of spirocyclic boron compounds and substances having a synergistic action, according to Claim 8, characterised in that the synergistic agent is $Sb_2O_3$.

10. Use of spirocyclic boron compounds and substances having a synergistic action, according to Claims 8 and 9, characterised in that polyurethanes, epoxide resins or polyesters are employed as the plastics.

**Revendications**

1. Composés spirocycliques du bore de formule générale

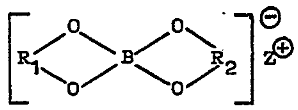

(I)

dans laquelle $R_1$ est différent de $R_2$ ou identique à $R_2$ et désigne un radical alcoylène linéaire ou ramifié, substitué de deux à quatre fois par du chlore, du brome ou de l'iode et ayant de 2 à 6 atomes de C, le radical 1,2,3,4,7,7-hexachloro-bicyclo-(2,2,1)-heptène-(2)(5,6-bis-méthylène, un radical ortho-phénylène ou ortho-ortho'-biphénylène substitué de deux à quatre fois par du chlore, du brome ou de l'iode, ou le radical de formule

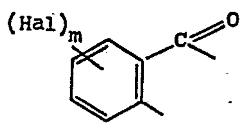

(II)

dans laquelle Hal désigne du chlore ou du brome et m est égal à 3 ou 4, et $Z^+$ est un ion de métal alcalin ou alcalino-terreux, un ion de métal de transition bivalent, les ions guanidinium, ammonium, mono-, di-, tri- et tétraalcoylammonium, cycloalcoylammonium ou diméthylbenzylammonium.

2. Composé spirocyclique du bore suivant la revendication 1, caractérisé en ce qu'il s'agit du composé bis-[2,2-bis-(bromométhyl)-1,3-propanediolate]-borate(1—) de guanidine.

3. Composé spirocyclique du bore suivant la revendication 1, caractérisé en ce qu'il s'agit du composé bis-(tétrabromopyrocatécholato)-borate(1—) d'ammonium.

4. Procédé pour la préparation des composés suivant les revendications 1 à 3 caractérisé en ce qu'on fait réagir une mole d'acide borique ou de trioxyde de bore avec un ou bien, quand $R_1$ est égal à $R_2$, avec deux moles d'un diol de formule générale:

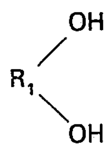

(III)

dans laquelle $R_1$ a la signification indiquée ci-dessus ou avec un acide salicylique substitué trois à quatre fois par du chlore ou du brome et, dans le cas ou $R_1$ n'est pas identique à $R_2$, ensuite avec une mole d'un diol de formule générale:

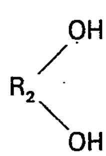

(IV)

dans laquelle $R_2$ a la signification indiquée ci-dessus, ou avec un acide salicylique substitué de trois à quatre fois par du chlore ou du brome, en présence d'au moins une mole d'une base ou d'un sel à réaction basique de formule $Z^+Y^-$, dans laquelle $Z^+$ a la même signification que ci-dessus et $Y^-$ est un ion OH ou l'ion d'un acide faible, à une température de 20 à 200°C, dans un solvant inerte.

5. Procédé suivant la revendication 4, caractérisé en ce qu'on efectue la réaction à une température de 60 à 150°C.

6. Procédé suivant les revendications 4 et 5, caractérisé en ce que la réaction est effectuée dans un solvant non miscible à l'eau et en ce que l'eau produite par la réaction est éliminée par distillation azéotropique.

7. Procédé suivant les revendications 4 et 5, caractérisé en ce qu'on effectue la réaction dans l'eau ou dans un solvant miscible à l'eau.

8. Application des composés spirocycliques du bore suivant les revendications 1 à 3, conjointement à des substances à effet de synergie pour l'ignifugation de matières plastiques.

9. Application des composés spirocycliques du bore et de substances à effet de synergie suivant la revendication 8, caractérisée en ce que l'agent de synergie est le $Sb_2O_3$.

10. Application des composés spirocycliques du bore et de substances à effet de synergie suivant les revendications 8 et 9, caractérisée en ce qu'on utilise comme matières plastiques des polyuréthanes, des résines époxy ou des polyesters.